# EUROPÄISCHE PATENTSCHRIFT

(11) **EP 3 256 918 B1**
(45) Veröffentlichungstag und Bekanntmachung des Hinweises auf die Patenterteilung: **30.06.2021**
(21) Anmeldenummer: 16703516.1
(22) Anmeldetag: 04.02.2016
(51) Int. Cl.: G05B 19/4065

(54) **VERFAHREN ZUM ÜBERWACHEN EINER WERKZEUGMASCHINE**
METHOD FOR MONITORING A MACHINE TOOL
PROCÉDÉ DE SURVEILLANCE D'UNE MACHINE-OUTIL

(30) Priorität: 10.02.2015 DE 102015001557
(43) Veröffentlichungstag der Anmeldung: 20.12.2017
(73) Patentinhaber: KOMET Deutschland GmbH, 74354 Besigheim (DE)
(72) Erfinder: BRINKHAUS, Jan-Wilm, 30916 Isernhagen (DE)
(74) Vertreter: Gramm, Lins & Partner Patent- und Rechtsanwälte PartGmbB
(86) Internationale Anmeldenummer: PCT/EP2016/052382
(87) Internationale Veröffentlichungsnummer: WO 2016/128290

(56) Entgegenhaltungen:
- EP-A2- 0 813 130
- CN-A- 102 707 669
- DE-A1- 10 133 612
- US-A1- 2013 304 248

## Beschreibung

Die Erfindung betrifft eine Werkzeugmaschine gemäß dem Oberbegriff von Anspruch 1. Gemäß einem zweiten Aspekt betrifft die Erfindung ein Verfahren zum Überwachen einer Werkzeugmaschine gemäß dem Oberbegriff von Anspruch 10.

Überwachungssysteme für Werkzeugmaschinen haben den Zweck, die Bearbeitung durch die Werkzeugmaschine zu überwachen. Dazu werden beispielsweise Drehmomente, Antriebsleistungen und/oder Kräfte erfasst und kontinuierlich mit einem vorgegebenen Verlauf verglichen. Kommt es zu Abweichungen, lässt das auf einen Fehler im Prozess schließen und es kann ein Warnsignal ausgegeben oder der Bearbeitungsprozess angehalten werden. Ein derartiges Verfahren ist aus der DE 10 2009 025 167 B3 bekannt.

Um Fehler bei der Bearbeitung schnell erkennen zu können, muss das Überwachungsverfahren mit einer hohen Abtastrate arbeiten, das heißt, dass pro Zeiteinheit eine Vielzahl an Messwerten aufgenommen und verarbeitet werden muss.

Trotz der Vorteile, die eine Überwachung eines Bearbeitungsprozesses bietet, konnte sich die Prozessüberwachung bislang hauptsächlich nur in der Massenfertigung durchsetzen.

Aus der EP 0 813 130 A2 ist bekannt, ein Überwachungsprogramm so auszugestalten, dass ermittelt wird, welche Werkzeuge bei der jeweiligen Fertigungsaufgabe verwendet werden, und dass dem Benutzer daraufhin vorprogrammierte Module angezeigt werden, die für das jeweilige Werkzeug geeignet sind. Zudem können Parameter eingeben werden, um das Überwachungsprogramm an sich ändernde Anforderungen anzupassen. Nachteilig an einem solchen System ist dessen geringe Flexibiltät beim Einsatz von neuen Werkzeugen und/oder Prozessen.

Aus der CN 102 707 669 A ist ein Konstruktionsverfahren für CAD-Systeme für die Stanzbearbeitung von Automobil-Längsträgern bekannt. Im Rahmen des Verfahrens werden zunächst ein mathematisches Modell und generische Module erstellt und diese dann kompiliert und als DLL (dynamic link library, dynamische Programmbibliothek;) gespeichert. Diese DLLs sind dann Teil von Programmen, die auf den Stanzmaschinen installiert werden. Auf den Stanzmaschinen Es läuft kein Kompilierer, mit dem das Programm kompiliert werden kann.

Der Erfindung liegt die Aufgabe zu Grunde, die Überwachung von Werkzeugmaschinen so zu verbessern, dass auch die Erstellung eines Überwachungs-Programms für die Bearbeitung von Kleinserien ohne großen Aufwand möglich ist.

Die Erfindung löst das Problem durch eine Werkzeugmaschine mit den Merkmalen von Anspruch 1. Die Erfindung löst das Problem zudem durch eine Werkzeugmaschinen-Überwachungsvorrichtung mit den Merkmalen von Anspruch 9.

Gemäß einem zweiten Aspekt löst die Erfindung das Problem durch ein Verfahren mit den Merkmalen von Anspruch 11.

Vorteilhaft an der Erfindung ist, dass auch die Bearbeitung von Werkstücken in Kleinserien ermöglicht wird. Bislang ist der Aufwand zum Erstellen eines Überwachungs-Programms für die Bearbeitung von Kleinserien so aufwendig, dass der Gewinn an Prozesssicherheit die Überwachung nicht rechtfertigt. Durch die Erfindung kann ein Bestehendes Bearbeitungsprogramm individuell auf die jeweilige Bearbeitungsaufgabe angepasst werden.

Es ist ein weiterer Vorteil, dass eine Überwachungseinheit, die den digitalen Speicher und einen Prozessor aufweist, besonders effizient genutzt werden kann. So kann der Überwachungs-Programmkode so geschrieben werden, dass er besonders wenige Ressourcen benötigt und schnell abgearbeitet werden kann. Das führt in der Regel dazu, dass der Überwachungs-Programmkode schlecht vom Menschen gelesen werden kann. Das gilt insbesondere, wenn der Überwachungs-Programmkode kompiliert vorliegt. Durch den Skripteditor können laufzeitoptimiert Programmmodule vorgefertigt vorgehalten und durch die Modifikationsbefehle aktiviert und deaktiviert werden. Auf diese Weise muss in der Überwachungseinheit nur derjenige Teil des Prozessüberwachungs-Programms vorgehalten werden, der notwendig ist, nicht aber nur rein vorsorglich programmierte Teile, die bei der jeweiligen nicht verwendet werden.

Anhand der vorliegenden Beschreibung wird unter dem Merkmal, dass die Werkzeugmaschine zumindest einen digitalen Speicher aufweist, insbesondere verstanden, das es möglich ist, dass die Werkzeugmaschine zwei, drei oder mehr digitale Speicher aufweist. Es ist dabei möglich, nicht aber notwendig, dass der Überwachungs-Programmkode und/oder der Prozessüberwachungs-Programmkode in einem dieser Speicher abgelegt ist. Insbesondere ist es auch möglich, dass die entsprechenden Programmkodes auf zwei oder mehr Speicher verteilt sind.

Unter dem Kompilierer wird insbesondere ein Programm verstanden, das zumindest auch zum Durchführen einer Syntax-Prüfung des Überwachungs-Programmkodes und der Modifikations-Befehle und zum Erzeugen eines Maschinenkodes oder eines Zwischenkodes ausgebildet ist.

Unter dem Maschinenkode wird eine Folge von Befehlen verstanden, die von einer Maschinensteuerung, die Bestandteil einer erfindungsgemäßen Werkzeugmaschine ist und die Bearbeitung des Werkstoffes steuert, automatisch ohne weitere Konvertierung ausgeführt werden kann.

Unter dem Zwischenkode wird eine Zeichenfolge verstanden, die ohne Syntax-Prüfung in Maschinensprache übersetzt werden kann. Beim Zwischenkode handelt es sich vorzugsweise um Bytekode, IL (intermediate language) oder MSIL (Microsoft intermediate language).

Unter dem Überwachungs-Programmkode wird eine Folge von Befehlen verstanden, die das Überwachungsverfahren beschreibt, das heißt kodiert. Der Überwachungs-Programmkode kann kompiliert, also beispielsweise in Maschinensprache, und/oder unkompiliert vorliegen.

Unter der Werkzeugmaschinen-Überwachungsvorrichtung wird insbesondere eine Vorrichtung verstanden, die zum Verbinden mit einer Maschine ausgebildet ist, so dass beide zusammen eine erfindungsgemäße Werkzeugmaschine bilden.

Unter dem Merkmal, dass der Skripteditor zum Eingeben und/oder Einlesen ausgebildet ist, wird insbesondere verstanden, dass in den Skripteditor ein oder mehrere Befehle eingegeben werden können, beispielsweise mittels einer Tastatur und/oder eines Touchscreens, und dass auf den so eingegebenen Befehl zugegriffen werden kann. Der Skripteditor kann auch zum Auswählen von Funktionen mittels einer grafischen Benutzeroberfläche ausgebildet sein, sodass die Funktionen durch den Kompilierer fest in den ausgeführten Überwachungskode eingebunden werden. Der Kompilierer kann einen Linker umfassen.

Wenn von einem Befehl gesprochen wird, wird zumindest ein Befehl verstanden.

Unter einer Werkzeugmaschinen-Überwachungsvorrichtung wird insbesondere eine Vorrichtung verstanden, die ausgebildet ist zum Verbinden mit einer Steuereinheit einer Werkzeugmaschine, sodass von der Steuereinheit Leistungskenngrößen abgefragt werden können.

Vorzugsweise umfasst die Werkzeugmaschine eine Überwachungseinheit, die den zumindest einen Speicher und einen Prozessor umfasst, der eingerichtet ist zum Erzeugen und Abarbeiten des Prozessüberwachungs-Programmkodes. In anderen Worten wird der Prozessüberwachungs-Programmkode vom gleichen Prozessor sowohl erzeugt als auch abgearbeitet. Auf diese Weise kann das Prozessüberwachungsverfahren, das durch den Prozessüberwachungs-Programmkode kodiert ist, einfach geändert werden. Es ist nämlich lediglich notwendig, im Skripteditor, der gemäß einer bevorzugten Ausführungsform ebenfalls auf dem Prozessor läuft, die Modifikations-Befehle zu ändern. Der Prozessor kann dann den Prozessüberwachungs-Programmkode erstellen und ausführen. Insbesondere ist es möglich, spontan auf sich ändernde Anforderungen an die Überwachung zu reagieren, indem das Prozessüberwachungs-Verfahren durch Änderung der Modifikations-Befehle verändert wird.

Es ist möglich, nicht aber notwendig, dass die Überwachungseinheit Teil der Maschinensteuerung ist. Es ist auch möglich, dass die Maschinensteuerung einen Steuerungs-Prozessor aufweist, der von dem Prozessor der Überwachungseinheit verschieden ist. Günstig ist es, wenn der Überwachungs-Programmkode ein Überwachungsverfahren kodiert, das Beschleunigungsdaten erfasst, die eine lineare Werkzeugkopf-Beschleunigung der Werkzeugspindel beschreiben, wobei der Kompilierer so ausgebildet ist, dass mittels des Modifikations-Befehls die Maschinenachsen auswählbar sind, deren Beschleunigungen in eine Vektorsumme zu Berechnung der Werkzeugkopf-Beschleunigung eingehen.

Gemäß einer bevorzugten Ausführungsform umfasst die Werkzeugmaschine einen ersten Antrieb, zumindest einen zweiten Antrieb, eine Maschinensteuerung, die zum Erfassen einer ersten Leistungskenngröße, die ein erstes Antriebsdrehmoment des ersten Antriebs beschreibt, und einer zweiten Leistungskenngröße, die ein zweites Antriebsdrehmoment des zweiten Antriebs beschreibt, ausgebildet sind, wobei der Skripteditor eingerichtet ist zum Eingeben und/oder Einlesen eines Modifikations-Befehles in Form eines Auswahl-Befehls und wobei der Kompilierer so ausgebildet ist, dass mittels des Auswahl-Befehls diejenige Leistungskenngröße auswählbar ist, auf deren Basis das Überwachungsverfahren durchgeführt wird.

Unter der Leistungskenngröße wird eine Messgröße verstanden, aus deren Änderung auf eindeutige Weise auf eine Änderung des Drehmoments des jeweiligen Antriebs geschlossen werden kann. Beispielsweise kann es sich bei der Leistungskenngröße um die momentane Antriebsleistung oder den elektrischen Motorstrom des Antriebs handeln.

Mittels des Auswahl-Befehls kann eine Datenquelle ausgewählt werden. In anderen Worten ist mittels des Auswahl-Befehls diejenige Komponente der Werkzeugmaschine auswählbar, zu der zugehörige Daten vom Prozessüberwachungs-Programmkode erfasst und zur Überwachung verwendet werden.

So ist es möglich, dass nur diejenige Maschinenachse überwacht wird, die das Werkzeug bewegt. Wird im Rahmen des Überwachungsprogramms beispielsweise der Revolver, der Werkzeuge zum Abnehmen durch eine Werkzeugaufnahme bewegt, so kann mittels des Auswahl-Befehls der Antrieb des Revolvers ausgewählt werden, sodass lediglich das Antriebsdrehmoment des Antriebs des Revolvers überwacht wird.

Günstig ist es zudem, wenn der Skripteditor eingerichtet ist zum Eingeben und/oder Einlesen eines Modifikations-Befehls in Form eines Skript-Auswahlbefehls, mittels dem vorgefertigte Überwachungsmodule oder Skripte aufgerufen werden können. Es ist dann möglich, mittels eines Auswahl-Befehls und eines Skriptauswahl-Befehls festzulegen, welche Daten mit welchen Programmmodulen welcher Zeitpunkt der Überwachung abgearbeitet werden soll. Ändert sich dann die Überwachungsaufgabe, weil beispielsweise ein zusätzliches Werkzeug eingewechselt wird, lässt sich das Programmüberwachungs-Verfahren einfach modifizieren.

Vorzugsweise umfasst die Werkzeugmaschine (a) eine Werkzeugspindel, die eine Werkzeugaufnahme zum Aufnehmen eines Werkzeugs zum Bearbeiten des Werkstücks umfasst, und (b) eine Maschinensteuerung, mittels der das Werkzeug, das in der Werkzeugaufnahme aufgenommen ist, erfassbar ist, wobei (c) der Skripteditor zum Eingeben und/oder Einlesen eines Modifikations-Befehls in Form eines Bedingungs-Befehls eingerichtet ist und wobei (d) der Kompilierer so ausgebildet ist, das zumindest auch mittels des Bedingungs-Befehls in Abhängigkeit vom aufgenommenen Werkzeug dasjenige Antriebsdrehmoment auswählbar ist, auf dessen Basis das Überwachungsverfahren durchgeführt wird.

Der Bedingungs-Befehl bewirkt, dass von der Maschinensteuerung ausgelesen wird, welches Werkzeug in der Werkzeugaufnahme aufgenommen ist, das heißt, mit welchem Werkzeug die nächste Bearbeitung durchgeführt wird. In Abhängigkeit von diesem Werkzeug wird dann die Lastkenngröße gewählt, die überwacht wird. Ist beispielsweise das aufgenommene Werkzeug ein Bohrer, so kann es sinnvoll sein, das Antriebsdrehmoment der Spindel, die den Bohrer dreht, zu überwachen. Ist hingegen das Werkzeug ein Fräskopf, kann es vorteilhaft sein, das Drehmoment derjenigen Maschinenachse zu überwachen, die für die Vorschubbewegung des Fräsers sorgt. Es sei darauf hingewiesen, dass auch mehrere Maschinenachsen überwacht werden können, insbesondere durch Rechnen einer gemeinsamen Leistungskenngröße. Diese Leistungskenngröße kann beispielsweise ein Maß für die Vorschubkraft sein. Auch ein Bedingungsbefehl kann aus mehreren Teilbefehlen bestehen.

Vorzugsweise ist der erste Antrieb eine Werkzeugspindel, die eine Werkzeugaufnahme zum Aufnehmen eines Werkzeugs zum Bearbeiten des Werkstücks umfasst, wobei der zweite Antrieb eine Vortriebs-Achse ist, also eine Maschinenachse, die eine Vorschubbewegung des Werkzeugs bewirkt. Es ist auch möglich, dass einer der beiden Antriebe der Antrieb eines Revolvers ist, mittels dem ein Werkzeug zuführbar ist.

Vorzugsweise umfasst die Werkzeugmaschine eine erste Maschinenachse, zumindest eine zweite Maschinenachse und zumindest eine Werkzeugspindel zum Aufnehmen und Antreiben eines Werkzeugs. Günstig ist es, wenn der Überwachungs-Programmkode ein Überwachungsverfahren kodiert, das zumindest einen Messwert erfasst, der einer Maschinenachse zugeordnet ist, wobei mittels dem Messwert auf eine Kraftkomponente geschlossen werden kann, die an dem Werkzeugkopf anliegt, wobei der Kompilierer so ausgebildet ist, dass mittels des Modifikations-Befehls diejenigen Maschinenachsen auswählbar sind, deren zugeordnete Messwerte in eine Vektorsumme zur Berechnung einer an dem Werkzeugkopf anliegenden Kraft eingehen.

Unter den Werkzeugkopf wird dabei diejenige Komponente der Werkzeugmaschine verstanden, die mittels der Vorschubachsen im Raum positionierbar ist und an der das Werkstück befestigt ist. Dadurch, dass die Maschinenachsen ausgewählt werden können, deren Messwerte in eine Vektorsumme eingehen, kann die Kraft, die am Werkzeugkopf anliegt, besonders einfach berechnet werden.

Vorzugsweise ist die Maschinensteuerung ausgebildet zum automatischen Ansteuern der zumindest einen Maschinenachse anhand des Bearbeitungsprogramms und zum Erfassen von zumindest einer Messwertfolge von Messwerten in Abhängigkeit von einer den Fortschritt des Bearbeitungsprogramms charakterisierenden Laufvariablen. Diese Laufvariable kann beispielsweise die Zeit sein oder das aufsummierte Produkt aus der Zeit multipliziert mit dem jeweiligen Wert eines globalen Geschwindigkeitsreglers, der auch als Override-Regler bezeichnet werden kann und die Abarbeitungsgeschwindigkeit des Bearbeitungsprogramms angibt.

Günstig ist es, wenn der Skripteditor eingerichtet ist zum Eingeben und/oder Einlesen eines Modifikations-Befehls in Form eines Filter-Befehls, wobei der Kompilierer so ausgebildet ist, dass mittels des Filter-Befehls auf eine vorgegebene Messwertfolge ein mathematisches Filter anwendbar ist. Ein derartiges Filter ist eine Abbildung, die eine Eingangsfolge, nämlich der Messwertfolge, und eine Ausgangsfolge oder einen Vektor oder eine Skala zuordnet. Beispiele für Filter sind Glättungsfilter, Extremungsfilter, die das Maximum und/oder Minimum einer Folge in einem vorgegebenen Intervall ausgeben, Mittelwertfilter oder Faltungsfilter. Insbesondere handelt es sich bei dem Filter um einen nicht rekursives Filter. Besonders bevorzugt handelt es sich bei dem Filter um einen Reduktionsfilter. Ein Reduktionsfilter weist einer Messwertfolge eine reduzierte Folge zu, die bezogen auf ein Intervall der Laufvariablen weniger Folgenglieder hat, insbesondere höchstens ein Zehntel der Folgenglieder hat.

Vorzugsweise ist der Skripteditor zum Eingeben und/oder Einlesen eines Modifikations-Befehles in Form eines Zeitdauer-Befehles und/oder in Form einer Messgrößen-Auswahl aus einer vorgegebenen Menge an Messgrößen ausgebildet, wobei der Kompilierer so ausgebildet ist, das mittels des Zeitdauer-Befehls eine Intervalldauer für die Berechnung eines Maximalwerts und/oder eines Minimalwerts der Messgröße wählbar ist. Es kann sich dabei um eine gleitende Berechnung, bei der das Maximum über ein gleitendes Intervall berechnet wird, handeln. Alternativ ist auch möglich, dass über den Zeitdauer-Befehl die Länge voneinander angrenzenden Intervallen festlegbar ist. Unter der Zeitdauer wird insbesondere eine Zeitdauer verstanden, die in Einheiten der Laufvariablen gemessen wird.

Vorzugsweise ist der Skripteditor zum Eingeben und/oder Einlesen eines Modifikations-Befehles in Form eines Dokumentations-Befehls und einer Bedingung ausgebildet und der Kompilierer ist so ausgebildet, dass mittels des Dokumentations-Befehls eine Dokumentenerzeugung und/oder - Modifikation und/oder eine Warnsignalerzeugung in Abhängigkeit von der Bedingung bewirkbar ist. Ein Dokumentationsbefehl kann aus mehreren Teilbefehlen bestehen.

Im Folgenden wird die Erfindung anhand der beigefügten Zeichnungen näher erläutert. Dabei zeigt
- Figur 1: eine schematische Ansicht einer erfindungsgemäßen Werkzeugmaschine,
- Figur 2: ein Schema mit den Verfahrensblöcken eines erfindungsgemäßen Verfahrens und
- Figur 3: ein Ablaufschema eines erfindungsgemäßen Verfahrens.

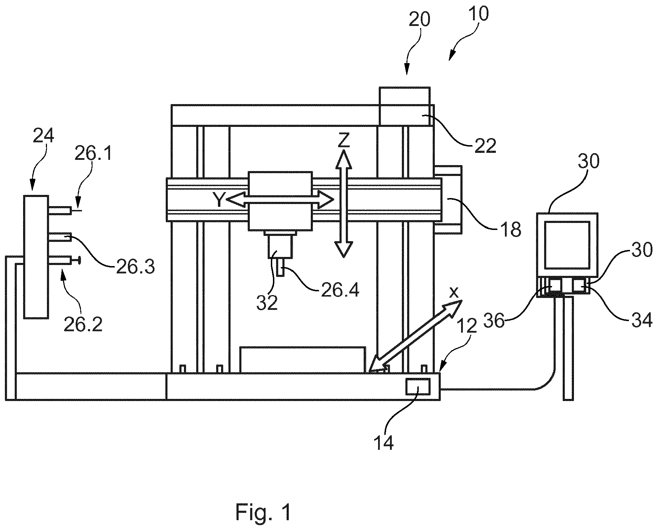

Figur 1 zeigt eine schematische Ansicht einer erfindungsgemäßen Werkzeugmaschine 10, die eine erste Maschinenachse 12 aufweist, die mittels eines ersten Antriebs 14 bewegbar ist. Die Werkzeugmaschine 10 besitzt zudem eine zweite Maschinenachse 16, die mittels eines zweiten, schematisch eingezeichneten Antriebs 18 angetrieben ist. Eine dritte Maschinenachse 20 ist mittels eines dritten Antriebs 22 antreibbar. Die Werkzeugmaschine 10 umfasst zudem einen Revolver 24, in dem Werkzeuge 26.1, 26.2, ...aufgenommen sind. Das Werkzeug 26.4 ist an einem Werkzeugkopf 28 befestigt.

Die Werkzeugmaschine 10 umfasst eine Maschinensteuerung 30, die elektrisch mit den Antrieben 14, 18, 22 sowie einem Antrieb des Revolvers 24 und einer Spindel 32 in Verbindung steht. Die Werkzeugmaschine 10 umfasst zudem einen digitalen Speicher 34, der im vorliegenden Fall Teil der Maschinensteuerung 30 ist und in dem ein Bearbeitungsprogramm abgelegt ist. Ein Prozessor 36 der Maschinensteuerung 30 greift auf den digitalen Speicher 34 zu und steuert die Komponenten der Werkzeugmaschine 10 so an, dass ein Werkstück gemäß einem Bearbeitungsprogramm, das im digitalen Speicher 34 gespeichert ist, bearbeitet wird.

Im digitalen Speicher 34 ist zudem ein Überwachungs-Programmkode abgelegt, der ein Überwachungsverfahren zur Überwachung dieser Bearbeitung kodiert. Beispielsweise umfasst das Überwachungsverfahren die Schritte eines Auslesens einer Leistung von zumindest einem der Antriebe 12, 16, 22 und dem Vergleichen dieser Antriebsleistungen mit den Antriebsleistungen aus vorhergehenden Bearbeitungszyklen. Die Maschinensteuerung 30 ist eingerichtet zum Erfassen einer ersten Leistungskenngröße P₁₄ in Form der momentanen Leistung des ersten Antriebs 14, einer zweiten Leistungskenngröße P₁₈ von einer momentanen Leistung des zweiten Antriebs 18 und einer dritten Leistungskenngröße P₂₂ in Form einer momentanen Leistung des dritten Antriebs 22.

Aus diesen Leistungskenngrößen ermittelt die Maschinensteuerung 30 anhand der jeweiligen Drehzahl des Antriebs das Drehmoment und daraus die Kraft, die am Werkzeugkopf 28 anliegt. Alternativ oder zusätzlich ermittelt die Maschinensteuerung 30 eine Änderung der Leistungskenngrößen und berechnet daraus eine Änderung der Kraft am Werkzeugkopf 28. Aus einer anfänglich bekannten Kraft wird durch numerische Integration der Änderungen der Kraft die aktuelle Kraft errechnet.

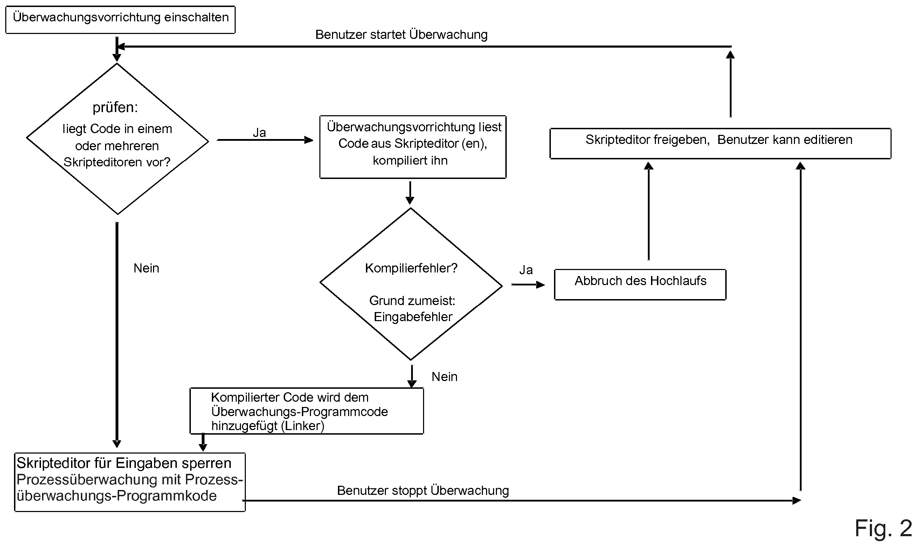

Figur 2 zeigt ein Schema mit den Verfahrensblöcken eines erfindungsgemäßen Verfahrens. Zunächst wird die Werkzeugmaschinen-Überwachungsvorrichtung eingeschaltet und es wird automatisch der digitale Speicher angesprochen und ein Grund-Programm gestartet, das zunächst prüft, ob ein Kode in einem oder mehreren Skripteditoren vorliegt. Ist das der Fall, wird der Kode aus dem Skripteditor (38) ausgelesen und kompiliert. Liegt kein Kompilierfehler vor, wird der kompilierte Kode dem bereits bestehenden Überwachungs-Programmkode hinzugefügt. Danach wird der Skripteditor für weitere Eingaben gesperrt. Der Bearbeitungsprozess der Werkzeugmaschine wird anhand des Prozess-Überwachungs-Programmkodes durchgeführt, der aus dem Überwachungs-Programmkode besteht, der nicht verändert wird, sowie den Kode, der auf Basis der Modifikationsbefehle erzeugt wird.

Auf Anforderung des Benutzers wird der Skripteditor (38) freigegeben und der Benutzer kann das im Skripteditor eingegebene Skript ändern.

Wird festgestellt, dass ein Kompilierfehler vorliegt, kann eine Fehlermeldung ausgegeben werden, so dass der Benutzer das Skript korrigieren kann.

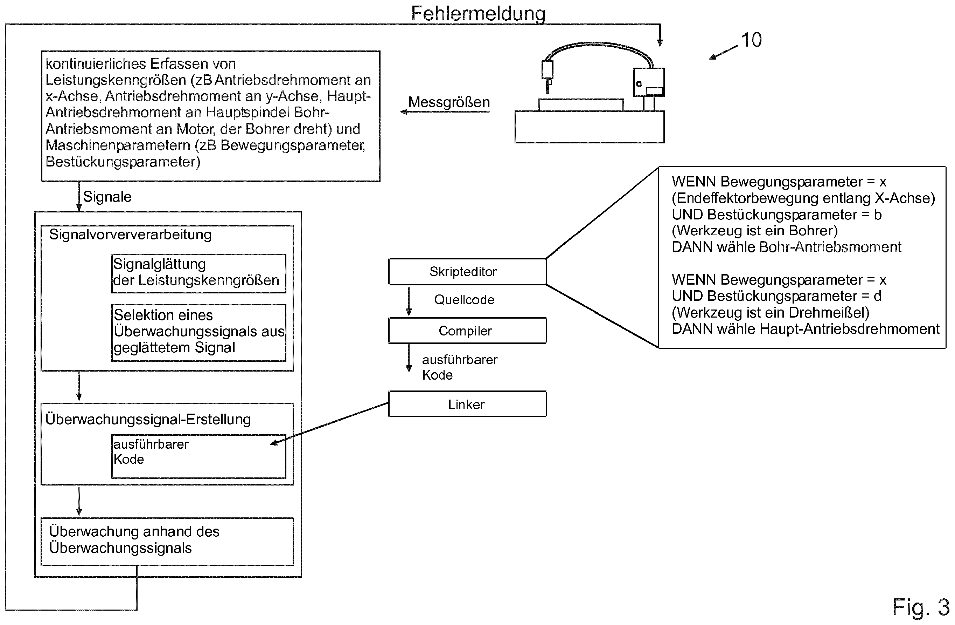

Figur 3 zeigt schematisch die Funktionsweise des erfindungsgemäßen Verfahrens. Von der Werkzeugmaschine 10 werden kontinuierlich Messgrößen erfasst, insbesondere Leistungskenngrößen, sowie Maschinenparameter. Unter einem Maschinenparameter wird ein Wert verstanden, der den nicht-dynamischen Zustand der Maschine beschreibt. Beispielsweise kann der Maschinenparameter ein Bewegungsparameter oder ein Bestückungsparameter sein. Ein Bestückungsparameter gibt an, welches Werkzeug und/oder welche Werkzeugart zur Bearbeitung verwendet wird. Beispielweise gibt der Bestückungsparameter an, ob es sich bei dem im Moment verwendeten Werkzeug um einen Fräser, einen Bohrer, einen Drehmeißel oder ein sonstiges Werkzeug handelt. Der Bewegungsparameter gibt an, entlang welcher Achse sich das Werkzeug bei der nächsten geplanten Bewegung bewegen soll.

Die Messgrößen werden in Form digitaler Signale erhalten und werden zunächst unter Verwendung vom Überwachungs-Programmkode, also einem Programmteil, der durch Eingaben im Skripteditor 38 nicht verändert werden kann, vorverarbeitet. Danach wird das erhaltene vorverarbeitete Signal anhand eines Programmkodes bearbeitet, der zumindest auch durch Eingabe im Skripteditor bestimmt wurde. Bearbeitet die Werkzeugmaschine 10 ein Werkstück, so wird der Bearbeitungsprozess anhand des Prozessüberwachungs-Programmkodes überwacht, der Anteile aus Überwachungs-Programmkode und Modifikationsbefehlen enthält.

In Figur 3 ist gezeigt, wie der Skripteditor 38 aussehen kann. Einzugeben sind zwei Bedingungsbefehle, anhand derer ausgewählt wird, welche Leistungskenngröße zur Überwachung des Bearbeitungsprozesses verwendet wird. Die Art der Überwachung, die mit der gewählten Leistungskenngröße durchgeführt ist, ist beispielweise in der DE 2009 025 167 B3 beschrieben und wird daher nicht näher erläutert.

### Bezugszeichenliste

- 10: Werkzeugmaschine
- 12: erste Maschinenachse
- 14: erster Antrieb
- 16: zweite Maschinenachse
- 18: zweiter Antriebe

- 20: dritte Maschinenachse
- 22: dritter Antrieb
- 24: Revolver
- 26: Werkzeug
- 28: Werkzeugkopf

- 30: Maschinensteuerung
- 32: Spindel
- 34: digitaler Speicher
- 36: Prozessor
- 38: Skripteditor

- P₁₄: erste Leistungskenngröße
- P₁₈: zweite Leistungskenngröße
- P₂₂: dritte Leistungskenngröße

## Patentansprüche

1. Spanende Werkzeugmaschine (10) mit
(a) zumindest einem digitalen Speicher (34), in dem
- ein Bearbeitungsprogrammkode, der die Bearbeitung eines Werkstücks durch die Werkzeugmaschine (10) kodiert, und
- ein Überwachungs-Programmkode, der ein Überwachungsverfahren zur Überwachung der Bearbeitung kodiert, abgelegt sind,
(b) wobei im digitalen Speicher (34) ein Skripteditor (38) zum Eingeben von Modifikations-Befehlen, die das Überwachungsverfahren verändern, abgelegt ist,
**dadurch gekennzeichnet, dass**
(c) in dem digitalen Speicher (34) ein Kompilierer abgelegt ist, der eingerichtet ist zum automatischen Erzeugen eines ausführbaren Prozessüberwachungs-Programmkodes aus dem Überwachungs-Programmkode und den Modifikations-Befehlen und dass
(d) die Werkzeugmaschine eine Überwachungseinheit, die den zumindest einen digitalen Speicher (34) und einen Prozessor (36), der eingerichtet ist zum Erzeugen und Abarbeiten des Prozessüberwachungs-Programmkodes, aufweist und die ausgebildet ist zum automatischen Durchführen eines Verfahrens mit den Schritten:
- nach einem Einschalten der Werkzeugmaschinen-Überwachungsvorrichtung Prüfen, ob in dem Skripteditor ein Kode vorliegt,
- bejahendenfalls Auslesen und Kompilieren des Kodes und Hinzufügen des kompilierten Kodes zu dem bereits bestehenden Überwachungs-Programmkode und
- danach Sperren des Skripteditors für weitere Eingaben.

2. Werkzeugmaschine (10) nach Anspruch 1, **gekennzeichnet durch**
- eine Maschinensteuerung, die einen Steuerungs-Prozessor aufweist,
- wobei der Prozessor (36) der Überwachungseinheit vom Steuerungs-Prozessor verschieden ist.

3. Werkzeugmaschine (10) nach einem der vorstehenden Ansprüche, **gekennzeichnet durch**
(a) einen ersten Antrieb (14),
(b) zumindest einen zweiten Antrieb (18),
(c) eine Maschinensteuerung (30), die zum Erfassen einer ersten Leistungskenngröße (P₁₄), die ein erstes Antriebsdrehmoment des ersten Antriebs (14) beschreibt, und
einer zweiten Leistungskenngröße (P₁₈), die ein zweites Antriebsdrehmoment des zweiten Antriebs (18) beschreibt, ausgebildet ist,
(d) wobei der Skripteditor (38) eingerichtet ist zum Eingeben eines Modifikations-Befehls in Form eines Auswahl-Befehls und
(e) wobei der Kompilierer so ausgebildet ist, dass mittels des Auswahl-Befehls diejenige Leistungskenngröße (P₁₄, P₁₈) auswählbar ist, auf deren Basis das Überwachungsverfahren durchgeführt wird.

4. Werkzeugmaschine (10) nach einem der vorstehenden Ansprüche, **gekennzeichnet durch**
(a) eine Werkzeugspindel (32), die eine Werkzeugaufnahme zum Aufnehmen eines Werkzeugs (26) zum Bearbeiten des Werkstücks umfasst, und
(b) eine Maschinensteuerung (30), mittels der das Werkzeug (26), das in der Werkzeugaufnahme aufgenommen ist, erfassbar ist,
(c) wobei der Skripteditor (38) eingerichtet ist zum Eingeben eines Modifikations-Befehls in Form eines Bedingungs-Befehls und
(d) der Kompilierer so ausgebildet ist, dass zumindest auch mittels des Bedingungs-Befehls in Abhängigkeit vom aufgenommenen Werkzeug (26) diejenige Leistungskenngröße, insbesondere das Antriebsdrehmoment, auswählbar ist, auf deren Basis das Überwachungsverfahren durchgeführt wird.

5. Werkzeugmaschine (10) nach einem der vorstehenden Ansprüche, **gekennzeichnet durch**
- eine erste Maschinenachse (12),
- zumindest eine zweite Maschinenachse (16) und
- zumindest eine Werkzeugspindel (32) zum Aufnehmen und Antreiben eines Werkzeugs (26),
- wobei das Überwachungsverfahren zumindest einen Messwert erfasst, der
einer Maschinenachse (12, 16) zugeordnet ist und
mittels dem auf eine Kraftkomponente geschlossen werden kann, die an einem Werkzeugkopf (28) anliegt,
- wobei der Kompilierer so ausgebildet ist, dass mittels des Modifikations-Befehls diejenigen Maschinenachsen (12, 16) auswählbar sind, deren zugeordnete Messwerte in eine Vektorsumme zur Berechnung einer an dem Werkzeugkopf (28) anliegenden Kraft eingehen.

6. Werkzeugmaschine (10) nach einem der vorstehenden Ansprüche, **gekennzeichnet durch**
- eine Maschinensteuerung (30), die ausgebildet ist zum automatischen
Ansteuern der zumindest einen Maschinenachse (12) anhand des Bearbeitungsprogramms und
Erfassen von zumindest einer Messwertfolge von Messwerten in Abhängigkeit von einer den Fortschritt des Bearbeitungsprogramms charakterisierenden Laufvariablen.

7. Werkzeugmaschine (10) nach einem der vorstehenden Ansprüche, **dadurch gekennzeichnet, dass**
- der Skripteditor (38) zum Eingeben eines Modifikations-Befehls in Form eines Zeitdauer-Befehls und/oder eines Modifikations-Befehls in Form einer Messgrößen-Auswahl aus einer vorgegebenen Menge an Messgrößen ausgebildet ist und
- der Kompilierer so ausgebildet ist, dass mittels des Zeitdauer-Befehls eine Intervalldauer für die Berechnung eines Maximalwerts und/oder eines Minimalwerts der Messgröße wählbar ist.

8. Werkzeugmaschine (10) nach einem der vorstehenden Ansprüche, **dadurch gekennzeichnet, dass**
- der Skripteditor (38) zum Eingeben
eines Modifikations-Befehls in Form eines Dokumentations-Befehls und
einer Bedingung ausgebildet ist und
- der Kompilierer so ausgebildet ist, dass mittels des Dokumentations-Befehls
eine Dokumentenerzeugung und/oder -modifikation und/oder
eine Warnsignalerzeugung
in Abhängigkeit von der Bedingung bewirkbar ist.

9. Werkzeugmaschinen-Überwachungsvorrichtung zum Anschließen an eine Werkzeugmaschine (10), mit
(a) zumindest einem digitalen Speicher (34), in dem ein Überwachungs-Programmkode, der ein Überwachungsverfahren zur Überwachung der Bearbeitung kodiert, abgelegt ist,
(b) wobei im digitalen Speicher (34) ein Skripteditor (38) zum Eingeben und/oder Einlesen von Modifikations-Befehlen, die das Überwachungsverfahren verändern, abgelegt ist,
**dadurch gekennzeichnet, dass**
(c) in dem Speicher (34) ein Kompilierer abgelegt ist, der eingerichtet ist zum automatischen Erzeugen eines ausführbaren Prozessüberwachungs-Programmkodes aus dem Überwachungs-Programmkode und den Modifikations-Befehlen und dass
(d) die Werkzeugmaschinen-Überwachungsvorrichtung ausgebildet ist zum automatischen Prüfen nach einem Einschalten der Werkzeugmaschinen-Überwachungsvorrichtung, ob in dem Skripteditor ein Kode vorliegt,
bejahendenfalls Auslesen und Kompilieren des Kodes und Hinzufügen des kompilierten Kodes zu dem bereits bestehenden Überwachungs-Programmkode und
danach Sperren des Skripteditors für weitere Eingaben.

10. Verfahren zum Überwachen einer Werkzeugmaschine (10), mit den Schritten:
(i) Einlesen eines Überwachungs-Programmkodes, der ein Überwachungsverfahren zur Überwachung der Bearbeitung eines Werkstücks durch die Werkzeugmaschine (10) kodiert,
(ii) Erfassen zumindest eines Modifikations-Befehls in einem Skripteditor (38) und
(iii) Überwachen der Werkzeugmaschine (10) mittels des Prozessüberwachungs-Programmkodes,
**dadurch gekennzeichnet, dass**
(iv) der Prozessüberwachungs-Programmkode automatisch aus dem Überwachungs-Programmkode und den Modifikations-Befehlen kompiliert oder vorkompiliert wird und dass
(v) das Verfahren die folgenden Schritte aufweist:
- nach einem Einschalten der Werkzeugmaschinen-Überwachungsvorrichtung Prüfen, ob in dem Skripteditor ein Kode vorliegt,
- bejahendenfalls Auslesen und Kompilieren des Kodes und Hinzufügen des kompilierten Kodes zu dem bereits bestehenden Überwachungs-Programmkode und
- danach Sperren des Skripteditors für weitere Eingaben.

## Claims

1. A machine tool (10), in particular a cutting machine tool, comprising
(a) at least one digital storage unit (34) in which
- a machining program code that codes the machining process of a workpiece by means of the machine tool (10) and
- a monitoring program code that codes a monitoring process for monitoring the machining process are stored,
(b) wherein a script editor (38) is stored in the digital storage unit (34) for inputting and/or reading modification commands that change the monitoring process,
**characterized in that**
(c) a compiler is stored in the digital storage unit (34) that is designed to automatically generate an executable process monitoring program code from the monitoring program code and the modification commands and **in that**
(d) the machine tool comprises a monitoring unit that comprises the at least one digital storage unit (34) and a processor (36) which is configured to generate and process the process monitoring program code, the monitoring unit being set up to automatically carry out a method comprising the steps:
- after the machine tool monitoring device is switched on, checking whether a code is available in the script editor,
- if that is the case, reading the code from the script editor and compiling the code and adding the compiled code to the existing monitoring program code and
- blocking the script editor for further inputs.

2. The machine tool (10) according to claim 1, **characterized by**
- a machine control system comprising a control system processor
- wherein the processor (36) of the monitoring unit is different to the control system processor.

3. The machine tool (10) according to one of the above claims, **characterised by**
(a) a first drive (14),
(b) at least a second drive (18),
(c) a machine control system (30) that is designed to record a first performance indicator (P₁₄), which describes a first drive torque of the first drive (14), and
a second performance indicator (P₁₈), which describes a second drive torque of the second drive (18),
(d) wherein the script editor (38) is designed to input a modification command in the form of a selection command and
(e) wherein the compiler is designed such that, by means of the selection command, it is possible to select the performance indicator (P₁₄, P₁₈) on which the execution of the monitoring process is based.

4. The machine tool (10) according to one of the above claims, **characterised by**
(a) a tool spindle (32) that comprises a tool holder for holding a tool (26) for the machining processing of the workpiece, and
(b) a machine control system (30), by means of which the tool (26) that is held in the tool holder can be accessed,
(c) wherein the script editor (38) is designed to input a modification command in the form of a condition command and
(d) the compiler is designed such that, at least also by means of the condition command - depending on the tool (26) held - it is possible to select the performance indicator, especially the drive torque, on which the execution of the monitoring process is based.

5. The machine tool (10) according to one of the above claims, **characterised by**
- a first machine axis (12),
- at least a second machine axis (16) and
- at least one tool spindle (32) for holding and driving a tool (26),
- wherein the monitoring process records at least one measured value which
is allocated to a machine axis (12, 16) and
by means of which it is possible to determine a force component that is acting on the tool head (28),
- wherein the compiler is designed such that, by means of the modification command, it is possible to select the machine axes (12, 16) whose allocated measured values are included in a vector sum for the calculation of a force that is acting on the tool head (28).

6. The machine tool (10) according to one of the above claims, **characterised by**
- a machine control system (30) that is designed to automatically drive the at least one machine axis (12) with the aid of the machining process program and
record at least one sequence of measured values, subject to a control variable that characterises the progress of the machining process program

7. The machine tool (10) according to one of the above claims, **characterised by** the fact that
- the script editor (38) is designed to input a modification command in the form of a duration command and/or a modification command in the form of a measured value selection from a pre-determined quantity of measured values, and
- the compiler is designed such that, by means of the duration command, an interval duration can be selected for the calculation of a maximum value and/or a minimum value of the measured value.

8. The machine tool (10) according to one of the above claims, **characterised by** the fact that
- the script editor (38) is designed to input
a modification command in the form of a documentation command and
a condition, and
- the compiler is designed such that, by means of the documentation command,
a document can be generated and/or modified and/or
a warning signal can be generated,
subject to the condition.

9. A machine tool monitoring device to be connected to a machine tool (10), comprising
(a) at least one digital storage unit (34) in which a monitoring program code that codes a monitoring process for monitoring the machining process is stored,
(b) wherein a script editor (38) is stored in the digital storage unit (34) for inputting and/or reading modification commands that change the monitoring process, and
**characterised by** the fact that
(c) a compiler is stored in the storage unit (34) that is designed to automatically generate an executable process monitoring program code from the monitoring program code and the modification commands and that
(d) the machine tool monitoring device is configured to automatically check whether a code is available in the script editor after the machine tool monitoring device is switched on, if that is the case to read the code from the script editor and to compile the code and to add the compiled code to the existing monitoring program code and
to block the script editor for further inputs.

10. A method for monitoring a machine tool (10), featuring the steps:
(i) reading of a monitoring program code that codes a monitoring process for monitoring the machining process of a workpiece by the machine tool (10),
(ii) recording of at least one modification command in a script editor (38) and
(iii) monitoring of the machine tool (10) by means of the process monitoring program code,
**characterized in that**
(iv) the monitoring program code is automatically compiled or precompiled and that
(v) the method comprises the following steps:
- after the machine tool monitoring device is switched on, checking whether a code is available in the script editor,
- if that is the case, reading the code from the script editor and compiling the code and adding the compiled code to the existing monitoring program code and
- blocking the script editor for further inputs.

## Revendications

1. Machine-outil d'usinage (10), comportant
(a) au moins une mémoire numérique (34), dans laquelle sont stockés
- un code de programme d'usinage codant l'usinage d'une pièce à usiner par la machine-outil (10), et
- un code de programme de surveillance codant un procédé de surveillance pour surveiller l'usinage,
(b) un éditeur de script (38) pour entrer des instructions de modification qui modifient le procédé de surveillance étant stocké dans la mémoire numérique (34),
**caractérisée en ce que**
(c) un compilateur est stocké dans ladite mémoire numérique (34), qui est adapté pour générer automatiquement un code de programme exécutable de surveillance de processus à partir dudit code de programme de surveillance et desdites instructions de modification, et
(d) la machine-outil comprend une unité de surveillance qui comprend ladite au moins une mémoire numérique (34) et un processeur (36) adapté pour générer et exécuter ledit code de programme de surveillance de processus et qui est réalisée pour automatiquement mettre en oeuvre un procédé comprenant les étapes consistant à :
- vérifier, après une mise en service du dispositif de surveillance de la machine-outil, si un code se présente dans l'éditeur de script,
- si tel est le cas, lire et compiler le code et ajouter le code compilé au code de programme de surveillance déjà existant, et
- ensuite, verrouiller l'éditeur de script vis-à-vis d'autres entrées.

2. Machine-outil (10) selon la revendication 1, **caractérisée par**
- une commande de machine qui comprend un processeur de commande,
- le processeur (36) de l'unité de surveillance étant distinct du processeur de commande.

3. Machine-outil (10) selon l'une des revendications précédentes, **caractérisée par**
(a) un premier entraînement (14),
(b) au moins un deuxième entraînement (18),
(c) une commande de machine (30) qui est réalisée pour détecter une première grandeur caractéristique de puissance (P₁₄) décrivant un premier couple d'entraînement du premier entraînement (14), et
une deuxième grandeur caractéristique de puissance (P₁₈) décrivant un deuxième couple d'entraînement du deuxième entraînement (18),
(d) l'éditeur de script (38) étant adapté pour entrer une instruction de modification sous la forme d'une instruction de sélection ; et
(e) le compilateur étant réalisé de manière à permettre de sélectionner, au moyen de l'instruction de sélection, celle des grandeurs caractéristiques de puissance (P₁₄, P₁₈) sur la base de laquelle le procédé de surveillance est mis en œuvre.

4. Machine-outil (10) selon l'une des revendications précédentes, **caractérisée par**
(a) une broche d'outil (32) comprenant un porte-outil destiné à recevoir un outil (26) pour usiner la pièce, et
(b) une commande de machine (30) permettant de détecter l'outil (26) reçu dans le porte-outil,
(c) l'éditeur de script (38) étant adapté pour entrer une instruction de modification sous la forme d'une instruction conditionnelle ; et
(d) le compilateur étant réalisé de manière à permettre de sélectionner, au moins également au moyen de l'instruction conditionnelle, en fonction de l'outil (26) reçu, celle des grandeurs caractéristiques de puissance, en particulier le couple d'entraînement, sur la base de laquelle le procédé de surveillance est mis en œuvre.

5. Machine-outil (10) selon l'une des revendications précédentes, **caractérisée par**
- un premier axe de machine (12),
- au moins un deuxième axe de machine (16), et
- au moins une broche d'outil (32) destinée à recevoir et entraîner un outil (26),
- le procédé de surveillance détectant au moins une valeur de mesure qui est associée à un axe de machine (12, 16) et
qui permet de conclure à une composante de force appliquée à une tête d'outil (28),
- le compilateur étant réalisé de manière à permettre de sélectionner, au moyen de l'instruction de modification, ceux des axes de machine (12, 16) dont les valeurs de mesure associées sont incluses dans une somme vectorielle pour calculer une force appliquée à la tête d'outil (28).

6. Machine-outil (10) selon l'une des revendications précédentes, **caractérisée par**
- une commande de machine (30) qui est réalisée pour automatiquement piloter ledit au moins un axe de machine (12) sur la base du programme d'usinage et
détecter au moins une séquence de valeurs de mesure en fonction d'une variable de déroulement caractérisant l'avancement du programme d'usinage.

7. Machine-outil (10) selon l'une des revendications précédentes, **caractérisée en ce que**
- l'éditeur de script (38) est réalisé pour entrer une instruction de modification sous la forme d'une instruction portant sur une durée et/ou une instruction de modification sous la forme d'une sélection de grandeurs de mesure parmi un ensemble prédéterminé de grandeurs de mesure, et
- le compilateur est réalisé pour permettre de sélectionner, au moyen de l'instruction portant sur une durée, une durée d'intervalle pour le calcul d'une valeur maximale et/ou d'une valeur minimale de la grandeur de mesure.

8. Machine-outil (10) selon l'une des revendications précédentes, **caractérisée en ce que**
- l'éditeur de script (38) est réalisé pour entrer
une instruction de modification sous la forme d'une instruction de documentation et
une condition, et
- le compilateur est réalisé de manière à permettre de procurer, au moyen de l'instruction de documentation,
la génération et/ou la modification d'un document et/ou la génération d'un signal d'alerte
en fonction de la condition.

9. Dispositif de surveillance de machine-outil destiné à être connecté à une machine-outil (10), comprenant
(a) au moins une mémoire numérique (34) dans laquelle est stocké un code de programme de surveillance codant un procédé de surveillance pour surveiller l'usinage,
(b) un éditeur de script (38) pour entrer et/ou lire des instructions de modification qui modifient le procédé de surveillance étant stocké dans la mémoire numérique (34),
**caractérisé en ce que**
(c) un compilateur est stocké dans ladite mémoire numérique (34), qui est adapté pour générer automatiquement un code de programme exécutable de surveillance de processus à partir dudit code de programme de surveillance et desdites instructions de modification, et
(d) le dispositif de surveillance de machine-outil est réalisé
pour vérifier automatiquement, une fois que le dispositif de surveillance de machine-outil est mis en service, si un code se présente dans l'éditeur de script, et
si tel est le cas, pour lire et compiler le code et pour ajouter le code compilé au code de programme de surveillance déjà existant, et
pour ensuite verrouiller l'éditeur de script vis-à-vis d'autres d'entrées.

10. Procédé pour surveiller une machine-outil (10), comprenant les étapes consistant à :
(i) lire un code de programme de surveillance codant un procédé de surveillance pour surveiller l'usinage d'une pièce par la machine-outil (10),
(ii) acquérir au moins une instruction de modification dans un éditeur de script (38), et
(iii) surveiller la machine-outil (10) au moyen du code de programme de surveillance de processus,
**caractérisé en ce que**
(iv) le code de programme de surveillance de processus est compilé ou précompilé automatiquement à partir du code de programme de surveillance et des instructions de modification, et
(v) le procédé comprend les étapes consistant à :
- vérifier, après une mise en service du dispositif de surveillance de machine-outil, si un code se présente dans l'éditeur de script,
- si tel est le cas, lire et compiler le code et ajouter le code compilé au code de programme de surveillance déjà existant, et
- ensuite, verrouiller l'éditeur de script vis-à-vis d'autres entrées.
